# EUROPÄISCHE PATENTSCHRIFT

(11) **EP 1 017 012 B1**
(45) Veröffentlichungstag und Bekanntmachung des Hinweises auf die Patenterteilung: **18.08.2004**
(21) Anmeldenummer: 99100005.0
(22) Anmeldetag: 02.01.1999
(51) Int. Cl.: G06K 13/067, G06K 1/12

(54) **Vorrichtung zum Zusammenführen einer Schreib- und/oder Leseeinheit und eines Informationsmediums**
Device for coupling a reading/recording head and a data carrier
Appareil de couplage d'une tête de lecture/écriture et d'un support d'informations

(43) Veröffentlichungstag der Anmeldung: 05.07.2000
(73) Patentinhaber: SCHEIDT & BACHMANN GMBH, D-41238 Mönchengladbach (DE)
(72) Erfinder: Miller, Norbert Dr., 41063 Mönchengladbach (DE); Höffges, Peter Dipl.Ing., 41179 Mönchengladbach (DE)
(74) Vertreter: Stenger, Watzke & Ring Patentanwälte

(56) Entgegenhaltungen:
- EP-A- 0 673 147
- WO-A-82/00975
- US-A- 5 103 437

## Beschreibung

Die vorliegende Erfindung betrifft eine Vorrichtung zum Zusammenführen einer zum Beschreiben und/oder Lesen eines Informationsmediums geeigneten Schreib- und/oder Leseeinheit und eines solchen Informationsmediums mit einer der Schreib- und/oder Leseeinheit unter Belassung eines einen Bearbeitungsbereich definierenden Abstandes gegenüberliegend angeordneten Führungseinrichtung, wobei die Führungseinrichtung eine aus einem Transportband und einem Antrieb gebildete Transporteinheit aufweist.

Das Erfassen und Einlesen der von einem Informationsmedium bereitgestellten Informationen mittels einer entsprechenden Leseeinheit ist allgemein aus dem Stand der Technik bekannt. So ist es beispielsweise gängige Praxis, die auf einem Magnetstreifen einer Kreditkarte abgespeicherten oder die auf einem Blatt Papier abgedruckten Informationen unter Zuhilfenahme eines entsprechenden Lesegerätes zu erfassen und einzulesen.

Ebenfalls ist es aus dem Stand der Technik bekannt, Informationen auf einen dafür vorgesehenen Träger mit Hilfe einer Schreibeinheit aufzubringen. So ist beispielsweise das Bedrucken von Papier, das Aufbringen eines Magnetstreifens auf einem Kartenrohling oder das Beschreiben einer Computerdisk unter Verwendung einer Schreibeinheit aus dem Stand der Technik bekannt.

Für das Aufbringen von Informationen auf ein dafür geeignetes Medium bzw. für das Erfassen und Aufnehmen der von einem Informationsmedium bereitgestellten Informationen sind aus dem Stand der Technik eine Reihe von Vorrichtungen bekannt. Dabei lassen sich die Vorrichtungen prinzipiell danach unterscheiden, ob der Abstand zwischen dem in die Vorrichtung eingebrachten und in seiner Lage fixierten Informationsmedium und der Schreib- und/oder Leseeinheit unveränderbar ist oder ob das in die Vorrichtung eingebrachte Informationsmedium und die Schreib- und/oder Leseeinheit derart relativ zueinander bewegbar angeordnet sind, daß der Abstand zwischen der Schreib- und/oder Leseeinheit und dem Informationsmedium einstellbar ist. Für das Aufnehmen und/oder Aufbringen von Informationen ist es jedoch in jedem Fall erforderlich, daß das Informationsmedium und die Schreib- und/oder Leseeinheit definiert voneinander beabstandet angeordnet sind.

Vorrichtungen, bei denen der Abstand zwischen dem in die Vorrichtung eingebrachten und in seiner Lage fixierten Informationsmedium und der Schreib- und/oder Leseeinheit unveränderbar vorgegeben ist, können nur solche Informationsmedien aufnehmen, die der geometrischen Vorgabe der Vorrichtungsanordnung entsprechen. So können beispielsweise bei Vorrichtungen, die Informationen von einem auf einen kartenförmigen Informationsträger aufgebrachten Magnetstreifen einlesen, die aus Kunststoff bestehenden und eine gewisse Materialdicke aufweisenden Informationsträger nicht durch solche aus Papier ersetzt werden, da diese eine geringere Materialdicke aufweisen und der zum Aufnehmen von Informationen erforderliche Abstand zwischen dem Informationsmedium und der Schreib- und/oder Leseeinheit nicht eingehalten wird. Weiterhin ist es bei Vorrichtungen dieser Art von Nachteil, daß der Abstand zwischen dem in die Vorrichtung eingebrachten Informationsmedium und der Schreib- und/oder Leseeinheit nicht manuell einstellbar und für individuelle Anwendungszwecke konfigurierbar ist.

Bei Vorrichtungen, bei denen der Abstand zwischen dem in die Vorrichtung eingebrachten Informationsmedium und der Schreib- und/oder Leseeinheit veränderbar ist, ist es aus dem Stand der Technik bekannt, daß die Schreib- und/oder Leseeinheit bezüglich des in seiner Lage fixierten Mediums bewegbar angeordnet ist und je nach eingebrachtem Medium in eine zum Aufnehmen und/oder Aufbringen von Informationen geeignete Lage verfährt. Die Verwendung von verstellbar anordbaren Schreib- und/oder Leseeinheiten macht allerdings mit Nachteil den Einsatz aufwendiger und zumeist sehr komplexer Verstellmechanismen notwendig, wobei diese aufgrund ihrer Komplexität sehr anfällig für Störungen sind. Im Falle eines Defektes einer solchen Verstelleinheit ist es zudem von Nachteil, daß die Beseitigung von Störungen in der Regel sehr zeit- und kostenaufwendig ist.

In der EP 0 673 147 A2 ist eine Bildverarbeitungseinrichtung in Form eines Kopiergerätes offenbart. Insbesondere ist dort ein Papiertransportmechanismus im Schwenkdeckel eines solchen Kopiergerätes gezeigt. Ober ein Transportrollensystem wird Papier auf eine einer Leseeinheit gegenüberliegende Glasplatte verbracht. Eine federbelastete Dokumentenandruckplatte sorgt für ein sicheres Anliegen des Dokuments an der Glasplatte unter einem definierten Abstand.

In der WO 82/00975 ist eine Druckpresse mit einem Förderband zum Transportieren von zu bedruckenden Papierbögen offenbart. Mit Fotozellen wird die Position eines zu bedruckenden Papierbogens relativ zu einem Druckzylinder überwacht.

Die US 5,103,437 schließlich offenbart einen CD-Wechsler, bei dem ein Greifarm eine CD aus einem Vorratsregister entnimmt und einer Abspieleinheit zuführt

Ausgehend von diesem Stand der Technik liegt der vorliegenden Erfindung die **Aufgabe** zugrunde, eine Vorrichtung bereitzustellen, bei der die Schreib- und/oder Leseeinheit und das in die Vorrichtung eingebrachte Informationsmedium relativ bewegbar zueinander anordbar sind, wobei die Schreib- und/oder Leseeinheit und das Informationsmedium mittels einer einfach aufgebauten und wenig störanfälligen Führungseinrichtung zusammenführbar sind.

Zur technischen **Lösung** dieser Aufgabe wird mit der Erfindung für eine Vorrichtung der eingangs genannten Art vorgeschlagen, daß die Führungseinrichtung weiterhin eine Verstelleinheit zur Veränderung des Abstandes zwischen Führungseinrichtung und Schreib- und/oder Leseeinheit aufweist.

Mit der Erfindung wird eine Vorrichtung vorgeschlagen, die zum einen das Aufnehmen von Informationen von einem Informationsmedium sowie zum anderen das Aufbringen von Informationen auf ein Medium erheblich verbessert.

Mit Vorteil ermöglicht es die erfindungsgemäße Vorrichtung, eine zum Aufnehmen und/oder Aufbringen von Informationen bestimmtes Informationsmedium mittels einer Führungseinrichtung an die dafür vorgesehene Schreib- und/oder Leseeinheit heranzuführen. In vorteilhafter Weise wird somit ein Zusammenführen von Schreib- und/oder Leseeinheit und Informationsmedium ermöglicht, wobei nicht, wie bereits aus dem Stand der Technik bekannt, die Schreib- und/oder Leseeinheit in Richtung des in seiner Lage fixierten Informationsmediums verfährt, sondern das Informationsmedium stattdessen mittels der Führungseinrichtung in Richtung der Schreib- und/oder Leseeinheit verfahren und so an diese zum Aufnehmen und/oder Aufbringen von Informationen herangeführt wird.

Bei der Vorrichtung besteht die Transporteinheit aus einem Transportband und einem Antrieb, wobei zur Führung des Transportbandes gemäß einer Weiterbildung der Erfindung wenigstens zwei Umlenkwalzen vorgesehen sind, die in einer im wesentlichen parallel zur Schreib- und/oder Leseeinheit verlaufenden Ebene angeordnet sind. Mit besonderem Vorteil ist das Transportband als Endlosschleife ausgebildet und wird über die Umlenkwalzen mittels eines Schrittmotors angetrieben. Das Transportband führt ein in die Vorrichtung eingebrachtes Informationsmedium in einer im wesentlichen parallel zur Schreib- und/oder Leseeinheit verlaufenden

Ebene an der Schreib- und/oder Leseeinheit vorbei, wobei der Abstand zwischen dem vom Transportband beförderten Informationsmedium und der Schreib- und/oder Leseeinheit einstellbar ist. Der aufgrund der beabstandeten Anordnung von Transporteinheit und Schreib- und/oder Leseeinheit entstehende Bearbeitungsbereich für das Informationsmedium zwischen Transporteinheit und Schreib- und/oder Leseeinheit ermöglicht in vorteilhafter Weise die Zuführung von Informationsmedien unterschiedlichster Materialdicke.

Gemäß einem weiteren vorteilhaften Vorschlag der Erfindung umfaßt die Vorrichtung eine Verstelleinheit, die aus einem Antrieb und einer Bewegungsübertragungskomponente gebildet ist, wobei wenigstens ein Teil der Bewegungsübertragungskomponente innerhalb der vom Transportband gebildeten Endlosschleife angeordnet und relativ zu dieser bewegbar ist. Die Bewegungsübertragungskomponente ist unter Belassung eines einen Bearbeitungsbereich definierenden Abstandes gegenüber der Schreib- und/oder Leseeinheit angeordnet, wobei durch ein Verfahren der Bewegungsübertragungskomponente in einer im wesentlichen senkrecht zur Schreib- und/oder Leseeinheit verlaufenden Richtung der Abstand zwischen dem in die Vorrichtung eingebrachten Informationsmedium und der Schreib- und/oder Leseeinheit vergrößert bzw. verringert werden kann.

Nach einer Zuführung eines Informationsmediums in den Bearbeitungsbereich zwischen Schreib- und/oder Leseeinheit und Führungseinrichtung wird das Informationsmedium in seiner Lage fixiert und an die Schreib- und/oder Leseeinheit herangeführt, wozu die Bewegungsübertragungskomponente in Richtung der Schreib- und/oder Leseeinheit verfährt. Die erfindungsgemäße Vorrichtung ermöglicht es somit, unabhängig von der Materialdicke des zugeführten Informationsmediums, die Schreib- und/oder Leseeinheit und das Informationsmedium zum Aufnehmen und/oder Aufbringen von Informationen zusammen zu führen. Die Bewegungsübertragungskomponente und die Schreib- und/oder Leseeinheit sind einander gegenüberliegend angeordnet, womit sich eine gradlinige Zuführungsbewegung der Bewegungsübertragungskomponete ergibt. Somit bedarf es auch bei der Zuführung unterschiedlichster Informationsmedien keiner zusätzlichen Justierung der Bewegungsübertragungskomponente.

Gemäß einem weiteren vorteilhaften Vorschlag der Erfindung ist als Antrieb für die Bewegungsübertragungskomponente ein Motor vorgesehen, der mit der Bewegungsübertragungskomponente über ein Getriebe gekoppelt ist, welches die Drehbewegung der Antriebswelle des Motors in eine Translationsbewegung der Bewegungsübertragungskomponente umwandelt. Dabei wird mit der erfindungsgemäßen Vorrichtung mit Vorteil vorgeschlagen, daß die Antriebswelle des Motors als Spindel ausgebildet ist und mit einer an der Bewegungsübertragungskomponente angeordneten Gewindebuchse in Eingriff steht. In vorteilhafter Weise kann dabei als Motor ein Schrittmotor vorgesehen sein.

Gemäß einem weiteren vorteilhaften Vorschlag der Erfindung besteht die Bewegungsübertragungskomponente im wesentlichen aus einer Anpreßwalze und einer Anpreßgabel. Dabei ist die Anpreßgabel über ein Getriebe mit dem Schrittmotor gekoppelt, wobei das Getriebe die Drehbewegung der Antriebswelle des Schrittmotors in eine Translationsbewegung der Anpreßgabel umwandelt. Die Anpreßgabel ist dabei ihrerseits mit der Anpreßwalze verbunden, wobei die Anpreßwalze innerhalb der vom Transportband gebildeten Endlosschleife angeordnet ist. In vorteilhafter Weise werden somit Transporteinheit und Verstelleinheit miteinander gekoppelt, so daß eine zusätzliche Synchronisation von Transporteinheit und Verstelleinheit für die positionsgenaue Zuführung des Informationsmedium an die Schreib- und/oder Leseeinheit nicht erforderlich ist.

Gemäß einem weiteren vorteilhaften Vorschlag der Erfindung sind mechanische Anschläge zur Beschränkung der Bewegung der Bewegungsübertragungskomponente vorgesehen, so daß die Schreib- und/oder Leseeinheit durch ein zu weites Verfahren der Bewegungsübertragungskomponente nicht zerstört werden kann.

Gemäß einem weiteren vorteilhaften Vorschlag der Erfindung ist der mit der Bewegungsübertragungskomponente gekoppelte Schrittmotor mittels Federn am Rahmen federnd angeordnet. Hierdurch wird ein elastischer Andruck erreicht, so daß die auf einem Informationsmedium befindlichen Unebenheiten ausgeglichen werden können.

Mit der erfindungsgemäßen Vorrichtung wird das Zusammenführen einer Schreib- und/oder Leseeinheit und eines Informationsmediums erheblich verbessert, da das Informationsmedium der Schreib- und/oder Leseeinheit zugeführt, und nicht wie aus dem Stand der Technik bekannt, die Schreib- und/oder Leseeinheit in Richtung des Informationsmediums verfahren wird. In vorteilhafter Weise besteht die Führungseinrichtung aus einer Transport- und einer Verstelleinheit, wobei Transport- und Verstelleinheit miteinander gekoppelt sind, so daß eine zusätzliche Synchronisation von Transport- und Verstelleinheit für die positionsgenaue Zuführung des Informationsmediums an die Schreib- und/oder Leseeinheit nicht erforderlich ist. Die Führungseinrichtung und die Schreib- und/oder Leseeinheit sind unter Belassung eines einen Bearbeitungsbereich definierenden Abstandes gegenüberliegend angeordnet, so daß ein in die Vorrichtung eingebrachtes Informationsmedium von der Schreib- und/oder Leseeinheit beabstandet in einer im wesentlichen parallel zur Schreib- und/oder Leseeinheit verlaufenden Ebene an der Schreib- und/oder Leseeinheit mittels eines Transportbandes vorbeigeführt wird. Für das Aufnehmen und/oder Aufbringen von Information verfährt die Bewegungsübertragungskomponente in Richtung der Schreib- und/oder Leseeinheit und drückt das Informationsmedium an diese heran. Während eines solchen Herandrückens wird das Informationsmedium vom Transportband kontinuierlich weitertransportiert, so daß ein fortlaufendes Beschreiben oder Einlesen von Informationen erfolgen kann. Sobald der Schreib- oder Lesevorgang beendet ist, verfährt die Bewegungsübertragungskomponente wieder zurück und das Informationsmedium wird von der Schreib- und/oder Leseeinheit gelöst. In vorteilhafter Weise ermöglicht es die Führungseinrichtung, ein Informationsmedium von der Schreib- und/oder Leseeinheit beabstandet vorbeizuführen, ohne daß dabei die Bewegungsübertragungskomponente das Informationsmedium an die Schreib- und/oder Leseeinheit heranführt. Da keine zusätzliche Synchronisation von Transporteinheit und Verstelleinheit notwendig ist, ist die erfindungsgemäße Vorrichtung zudem wenig störanfällig und leicht zu warten.

Weitere Vorteile und Merkmale der Erfindung ergeben sich aus der folgenden Beschreibung anhand der Figuren. Dabei zeigen:
- Fig. 1: schematische Frontansicht einer Verstelleinheit in Grundstellung,
- Fig. 2: schematische Frontansicht einer Verstelleinheit in Anpreßstellung,
- Fig. 3: teilweise geschnittene Frontansicht einer Führungseinrichtung am Beispiel eines Thermotransferdruckers,
- Fig. 4: teilweise geschnittene Seitenansicht einer Führungseinrichtung am Bespiel eines Thermotransferdruckers.

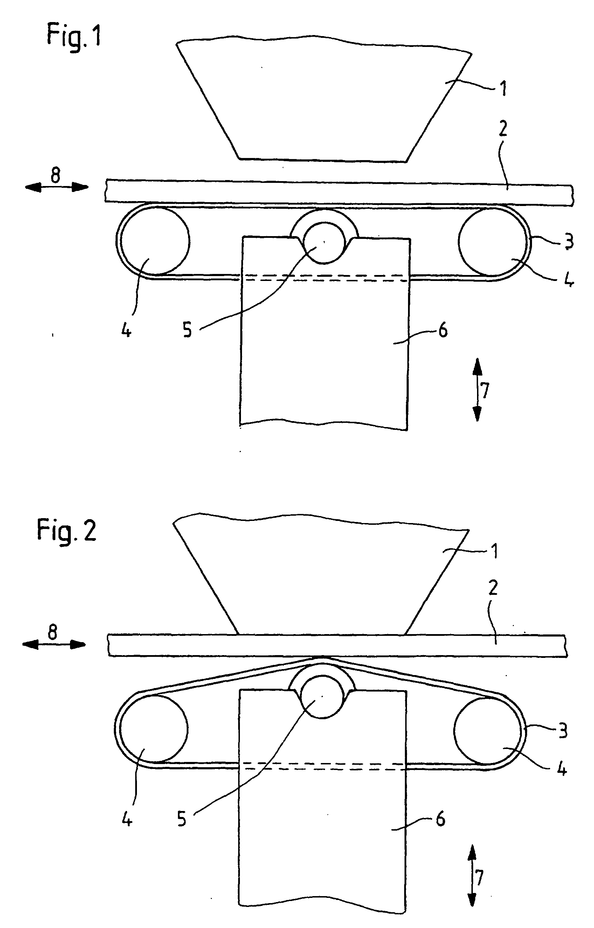

Fig. 1 zeigt in schematischer Darstellung eine Schreib- und/oder Leseeinheit 1 sowie eine unter Belassung eines einen Bearbeitungsbereich definierenden Abstandes gegenüberliegend angeordnete Bewegungsübertragungskomponente, die entsprechend der Bewegungsrichtung 7 relativ zur Schreib- und/oder Leseeinheit 1 bewegbar angeordnet ist. Die Bewegungsübertragungskomponete besteht im wesentlichen aus einer Anpreßwalze 5, einer mit dieser kraftschlüssig verbundenen Anpreßgabel 6 sowie einer in dieser Figur nicht dargestellten Antriebseinheit. Das Informationsmedium 2 wird gemäß der Bewegungsrichtung 8 mittels eines Transportbandes 3 in einer im wesentlichen parallel zur Schreib- und/oder Leseeinheit verlaufenden Ebene geführt und in den Bearbeitungsbereich zwischen Schreib- und/oder Leseeinheit 1 und Führungseinrichtung 22 eingebracht. Das Transportband 3 wird mittels zwei Umlenkwalzen 4 geführt und ist als Endlosschleife ausgebildet, wobei der Antrieb des Transportbandes 3 über die Umlenkwalzen 4 erfolgt. Als Antrieb ist ein in dieser Figur nicht dargestellter Schrittmotor vorgesehen. Je nach Umlaufrichtung des als Endlosschleife ausgebildeten Transportbandes 3 ist eine Transportbewegung 8 des Informationsmediums 2, bezogen auf die Zeichnungsebene, sowohl nach links als auch nach rechts möglich. Die Anpreßwalze 5 der Bewegungsübertragungskomponente ist innerhalb der durch das Transportband 3 gebildeten Endlosschleife angeordnet und über die Anpreßgabel 6 gemäß der Bewegungsrichtung 7 in einer im wesentlichen senkrecht zur Transportbandebene verlaufenden Richtung über einen in dieser Figur nicht dargestellten Antrieb relativ zur Schreib- und/oder Leseeinheit bewegbar angeordnet.

In der in Fig. 1 dargestellten Situation befindet sich die Bewegungsübertragungskomponente in ihrer Grundstellung, so daß das Informationsmedium 2 von der Schreib- und/oder Leseeinheit 1 beabstandet an dieser vorbeigeführt wird, ohne daß die Schreib- und/oder Leseeinheit Informationen vom Informationsmedium aufnimmt bzw. Informationen auf dieses aufbringt.

Fig. 2 zeigt die Bewegungsübertragungskomponente in ihrer Anpreßstellung. Die Anpreßgabel 6 ist in der im wesentlichen senkrecht zur Transportbandebene liegende Richtung 7 nach oben verfahren und preßt das Informationsmedium mittels der Anpreßwalze 5 gegen die Schreib- und/oder Leseeinheit 1. Das Informationsmedium 2 und die Schreib- und/oder Leseeinheit 1 sind zusammengeführt und ein Aufnehmen und/oder Aufbringen von Informationen durch die Schreib- und/oder Leseeinheit 1 ist nun möglich. Während des Anpressens des Informationsmediums 2 durch die Bewegungsübertragungskomponente an die Schreib- und/oder Leseeinheit 1 wird das Informationsmedium 2 weiterhin durch das Transportband 3 in einer im wesentlichen parallel zur Schreib- und/oder Leseeinheit verlaufenden Bewegungsrichtung 8 an der Schreib- und/oder Leseeinheit vorbeigeführt, so daß ein kontinulierliches Aufnehmen und/oder Aufbringen von Informationen durch die Schreib- und/oder Leseeinheit 1 möglich ist.

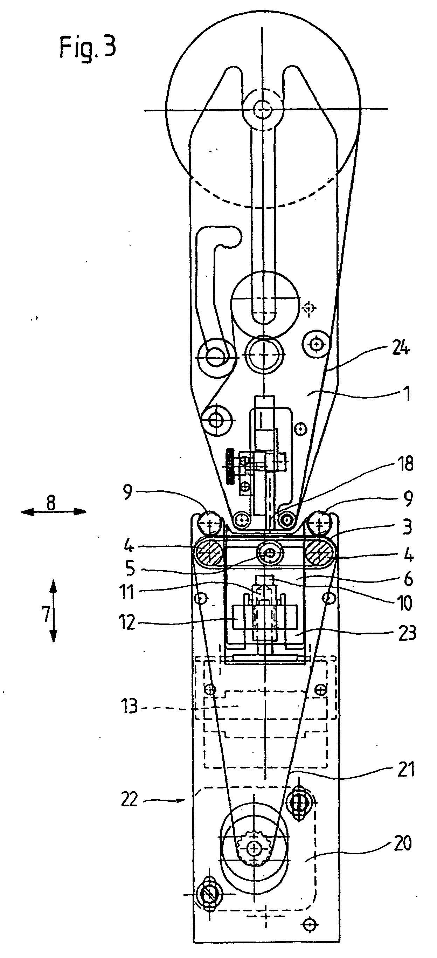

Fig. 3 zeigt eine teilweise geschnittene Frontansicht eines Druckwerkes inklusive Führungseinrichtung eines Thermotransferdruckers für eine Kartenverarbeitung. Mit diesem Thermotransferdrucker können als Informationsmedien dienende unbeschichtete Kartenrohlinge in Kreditkartenbreite bedruckt und hierdurch mit Informationen versehen werden. Die das Druckwerk 18 beinhaltende Schreib- und/oder Leseeinheit 1 ist gegenüber der aus Anpreßwalze 5, Anpreßgabel 6 und Antrieb bestehenden Bewegungsübertragungskomponente angeordnet und bezüglich seiner Lage ortsfest fixiert. Als Informationsmedium wird dem Druckwerk 18 ein hier nicht dargestelltes Druckmedium in einer im wesentlichen parallel zur Schreib- und/oder Leseeinheit verlaufenden Bewegungsrichtung 8 mittels des eine Endlosschleife bildenden Transportbandes 3 zugeführt und in den Bearbeitungsbereich zwischen Druckwerk 18 und Bewegungsübertragungskomponente hineingeführt. In der in Fig. 3 dargestellten Situation befindet sich die Bewegungsübertragungskomponente in ihrer Grundstellung, so daß ein zugeführtes Druckmedium das Druckwerk 18 passiert, ohne daß es bedruckt, also mit Informationen versehen wird.

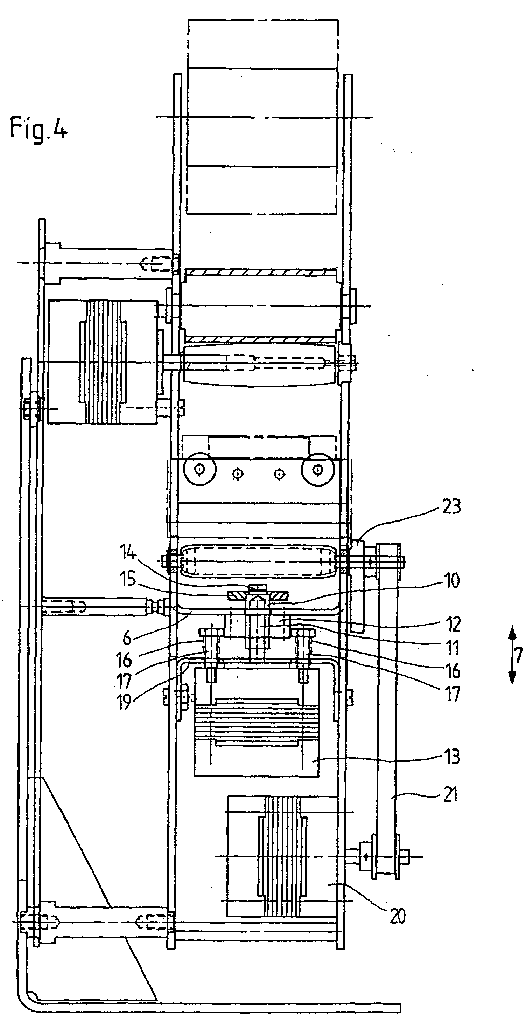

Der Antrieb der Bewegungsübertragungskomponente wird durch einen Schrittmotor 13 gebildet, der mittels Schrauben 17 und Federn 16 federnd am Rahmen 19 montiert ist, wodurch ein elastischer Andruck erreicht wird und Unebenheiten des Informationsmediums ausgeglichen werden. Dies zeigt am deutlichsten Fig. 4. Die Antriebswelle 11 des Schrittmotors 13 ist kraftschlüssig mit einer Hülse 10 versehen, die ein Außengewinde aufweist und mit der an der Anpreßgabel 6 angeordneten Gewindebuchse 12 in Eingriff steht. Je nach Drehrichtung der Antriebswelle 11 verfährt die Gewindebuchse 12 auf der Hülse 10 in einer im wesentlichen senkrecht zur Transportbandebene verlaufenden Bewegungsrichtung 7 nach oben bzw. nach unten, womit ebenfalls die Anpreßgabel 6 und die Anpreßwalze 5 in dieser Richtung verfahren werden. Ein an der Hülse 10 angeordneter und durch einen Sicherungsring 14 gesicherter mechanischer Anschlag 15 sorgt dafür, daß ein zu weites Verfahren der Anpreßgabel 6 in Richtung des Druckwerkes 18, welches zu einer Zerstörung des Druckwerkes 18 durch die Bewegungsübertragungskomponente führen könnte, vermieden wird. Ein zu weites Verfahren der Anpreßgabel 6 in entgegengesetzter Richtung wird durch die Gewindebuchse 12 verhindert, die nach einem gewissen Verfahrweg am Rahmen 19 anschlägt. Zum Bedrucken eines als Informationsmedium dienenden unbeschichteten Druckmediums wird dieser mittels des Transportbandes 3 in den Bearbeitungsbereich zwischen Führungseinrichtung 22 und Schreib- und/oder Leseeinheit 1 an die Druckzielposition gefahren und von unten mit der Bewegungsübertragungskomponente gegen die das Druckwerk 18 beinhaltende Schreib- und/oder Leseeinheit 1 gedrückt. Die Bewegungsübertragungskomponente wird dabei zeitlich so angesteuert, daß bei Erreichen der Druckposition ein für das Bedrucken des Druckmediums erforderlicher Andruck auf das Druckmedium wirkt. Beim Transport des Kartenrohlings mittels des als Endlosschleife ausgebildeten Transportbandes 3 wird die nötige Traktion des Druckmediums durch Andruckwalzen 9 erreicht, wobei auf jeder Seite des mit Informationen zu versehenen Druckmediums je eine Andruckwalze 9 angeordnet ist. Das zu transportierende Informationsmedium kann dabei zum Aufbringen von Informationen in einer im wesentlichen parallel zur Schreib- und/oder Leseeinheit verlaufenden Bewegungsrichtung 8 sowohl nach rechts als auch nach links befördert werden. Dabei wird das Transportband 3 über die Umlenkwalzen 4 mittels eines Schrittmotors 20 angetrieben, wobei die Kraftübertragung mittels eines Zahnriemens 21 erfolgt. Zwischen dem Zahnriemen 21 und der Anpreßgabel 6 ist desweiteren eine Führung 23 angeordnet, die formschlüssig mit der Anpreßwalze 5 verbunden ist und die ein am Druckwerk 18 vorbeigeführtes Thermotransferband 24 unterhalb der Schreib- und/oder Leseeinheit 1 zentriert. Wird die Anpreßwalze 5 nach unten verfahren, so gibt die Führung 23 seitliche eine Öffnung frei, durch die das Thermotransferband 24 leicht ausgewechselt werden kann.

Als Betriebsstellungen der Bewegungsübertragungskomponente sind im wesentlichen die Druckstellung und die Transportstellung voneinander zu unterscheiden. In der Druckstellung wird das Druckmedium gegen die das Druckwerk 18 beinhaltende Schreib- und/oder Leseeinheit gedrückt und mittels des Transportbandes 3 an dieser vorbeigeführt, wobei die mit Informationen zu versehenden Bereiche des Druckmediums entsprechend bedruckt werden. In der Transportstellung hingegen befindet sich die Bewegungsübertragungskomponente in eingefahrener Stellung und die Bewegungsübertragungskomponente hebt in dieser Stellung das zu transportierende Druckmedium vom Druckwerk 18 ab. Das Druckmedium kann so ohne das Druckwerk 18 zu berühren durch den Thermotransferdrucker transportiert werden.

### Bezugszeichenliste

- 1: Schreib- und/oder Leseeinheit
- 2: Informationsmedium
- 3: Transportband
- 4: Umlenkwalze
- 5: Anpreßwalze
- 6: Anpreßgabel
- 7: Bewegungsrichtung
- 8: Bewegungsrichtung
- 9: Andruckwalze
- 10: Hülse
- 11: Antriebswelle
- 12: Gewindebuchse
- 13: Schrittmotor
- 14: Sicherungsring
- 15: Anschlag
- 16: Feder
- 17: Schraube
- 18: Druckwerk
- 19: Rahmen
- 20: Schrittmotor
- 21: Zahnriemen
- 22: Führungseinrichtung
- 23: Führung
- 24: Thermotransferband

## Patentansprüche

1. Vorrichtung zum Zusammenführen einer zum Beschreiben und/oder Lesen eines Informationsmediums (2) geeigneten Schreib- und/oder Leseeinheit (1) und eines solchen Informationsmediums (2) mit einer der Schreib- und/oder Leseeinheit (1) unter Belassung eines einen Bearbeitungsbereich definierenden Abstandes gegenüberliegend angeordneten Führungseinrichtung (22), wobei die Führungseinrichtung eine aus einem Transportband (3) und einem Antrieb gebildete Transporteinheit aufweist,
**dadurch gekennzeichnet,**
**daß** die Führungseinrichtung (22) weiterhin eine Verstelleinheit zur Veränderung des Abstandes zwischen Führungseinrichtung und Schreib- und/oder Leseeinheit (1) aufweist.

2. Vorrichtung nach Anspruch 1, **dadurch gekennzeichnet, daß** wenigstens zwei Umlenkwalzen (4) zur Führung des Transportbandes (3) vorgesehen sind.

3. Vorrichtung nach Anspruch 2, **dadurch gekennzeichnet, daß** die Umlenkwalzen 4) in einer im wesentlichen parallel zur Schreib- und/oder Leseeinheit (1) verlaufenden Ebene angeordnet sind.

4. Vorrichtung nach einem der Ansprüche 2 oder 3, **dadurch gekennzeichnet, daß** der Antrieb des Transportbandes (3) über die Umlenkwalzen (4) erfolgt.

5. Vorrichtung nach einem der Ansprüche 1 bis 4, **dadurch gekennzeichnet, daß** als Antrieb des Transportbandes (3) ein Schrittmotor (20) vorgesehen ist.

6. Vorrichtung nach einem der Ansprüche 1 bis 5, **dadurch gekennzeichnet, daß** das Trannsportband (3) eine umlaufende Endlosschleife bildet.

7. Vorrichtung nach Anspruch 6, **dadurch gekennzeichnet, daß** die Verstelleinheit aus einem Antrieb und einer Bewegungsübertragungskomponente gebildet ist, wobei wenigstens ein Teil der Bewegungsübertragungskomponente innerhalb der vom Transportband (3) gebildeten Endlosschleife angeordnet und relativ zu dieser bewegbar ist.

8. Vorrichtung nach Anspruch 7, **dadurch gekennzeichnet, daß** die Bewegungsübertragungskomponente im wesentlichen senkrecht zu der durch die Umlenkwalzen (4) gebildeten Ebene angeordnet ist.

9. Vorrichtung nach Anspruch 7 oder 8, **dadurch gekennzeichnet, daß** als Antrieb ein Motor vorgesehen ist, der mit der Bewegungsübertragungskomponente über ein Getriebe gekoppelt ist, welches die Drehbewegung der Antriebswelle des Motors in eine Translationsbewegung der Bewegungsübertragungskomponente umwandelt.

10. Vorrichtung nach Anspruch 9, **dadurch gekennzeichnet, daß** die Antriebswelle des Motors als Spindel ausgebildet ist und mit einer an der Bewegungsübertragungskomponente angeordneten Gewindebuchse (12) in Eingriff steht.

11. Vorrichtung nach Anspruch 9 oder 10, **dadurch gekennzeichnet, daß** als Motor ein Schrittmotor (13) vorgesehen ist.

12. Vorrichtung nach Anspruch 11, **dadurch gekennzeichnet, daß** als Bewegungsübertragungskomponente eine Anpreßwalze (5) und eine mit dieser kraftschlüssig verbundene Anpreßgabel (6) vorgesehen sind, wobei die Anpreßwalze (5) innerhalb der vom Transportband (3) gebildeten Endlosschleife angeordnet ist und die Anpreßgabel (6) mit dem Schrittmotor (13) in Verbindung steht.

13. Vorrichtung nach einem der Ansprüche 11 oder 12, **dadurch gekennzeichnet, daß** der Schrittmotor (13) mittels Federn (16) am Rahmen federnd angeordnet ist.

14. Vorrichtung nach wenigstens einem der Ansprüche 7 bis 13, **dadurch gekennzeichnet, daß** mechanische Anschläge (15) zur Beschränkung der Bewegung der Bewegungsübertragungskomponente vorgesehen sind.

## Claims

1. Apparatus for coupling a writing and/or reading head (1), suitable for writing and/or reading a data carrier (2), and such a data carrier (2) including a guide device (22) arranged opposite to the writing and/or reading head (2) leaving a gap defining a working region, the guide device including a transport unit constituted by a transport belt (3) and an actuator, **characterised in that** the guide device (22) further includes an adjustment unit for altering the gap between the guide device and writing and/or reading head (1).

2. Apparatus as claimed in Claim 1, **characterised in that** at least two deflecting rollers (4) are provided for guiding the transport belt (3).

3. Apparatus as claimed in Claim 2, **characterised in that** the deflecting rollers (4) are arranged in a plane extending substantially parallel to the writing and/or reading unit (1).

4. Apparatus as claimed in one of Claims 2 or 3, **characterised in that** the actuation of the transport belt (3) is effected via the deflecting rollers (4).

5. Apparatus as claimed in one of Claims 1 to 4, **characterised in that** a stepper motor (20) is provided as the actuator for the transport belt (3).

6. Apparatus as claimed in one of Claims 1 to 5, **characterised in that** the transport belt (3) constitutes a rotating endless loop.

7. Apparatus as claimed in Claim 6, **characterised in that** the adjustment unit is constituted by an actuator and a movement transmission component, at least a portion of the movement transmission component being arranged within the endless loop constituted by the transport belt (3) and being movable relative to it.

8. Apparatus as claimed in Claim 7, **characterised in that** the movement transmission component is arranged substantially perpendicular to the plane defined by the deflecting rollers (4).

9. Apparatus as claimed in Claim 7 or 8, **characterised in that** a motor is provided as the actuator, which is coupled to the movement transmission component via a transmission unit, which converts the rotary motion of the drive shaft of the motor into a translational movement of the movement transmission component.

10. Apparatus as claimed in Claim 9, **characterised in that** the drive shaft of the motor is constructed in the form of a spindle and is in engagement with a threaded bush (12) arranged on the movement transmission component.

11. Apparatus as claimed in Claim 9 or 10, **characterised in that** a stepper motor (13) is provided as the motor.

12. Apparatus as claimed in Claim 11, **characterised in that** a pressure roller (5), constituting the movement transmission component, and a pressure shaft (6), connected to it in a force-locking manner, are provided, the pressure roller (5) being arranged within the endless loop constituted by the transport belt (3) and the pressure shaft (6) being connected to the stepper motor (13).

13. Apparatus as claimed in one of Claims 11 or 12, **characterised in that** the stepper motor (13) is resiliently arranged on the frame by means of springs (16).

14. Apparatus as claimed in at least one of Claims 7 to 13, **characterised in that** mechanical abutments (15) are provided to limit the movement of the movement transmission component.

## Revendications

1. Dispositif destiné au couplage d'une unité d'écriture et/ou de lecture (1) appropriée pour l'écriture et/ou la lecture d'un support d'informations (2), et d'un tel support d'informations (2) avec un dispositif de guidage (22) disposé en face de l'unité d'écriture et/ou de lecture (1) en laissant subsister un écartement définissant une zone de travail, le dispositif de guidage comportant une unité de transport constituée d'une bande transporteuse (3) et d'un entraînement,
**caractérisé en ce que**
le dispositif de guidage (22) comporte en outre une unité de réglage pour la modification de l'écartement entre le dispositif de guidage et l'unité d'écriture et/ou de lecture (1).

2. Dispositif selon la revendication 1, **caractérisé en ce qu'**il est prévu au moins deux cylindres de renvoi (4) pour le guidage de la bande transporteuse (3).

3. Dispositif selon la revendication 2, **caractérisé en ce que** les cylindres de renvoi (4) sont disposés dans un plan s'étendant pour l'essentiel parallèlement à l'unité d'écriture et/ou de lecture (1).

4. Dispositif selon l'une des revendications 2 ou 3, **caractérisé en ce que** l'entraînement de la bande transporteuse (3) est effectué par l'intermédiaire des cylindres de renvoi (4).

5. Dispositif selon l'une quelconque des revendications 1 à 4, **caractérisé en ce qu'**un moteur pas à pas (20) est prévu en tant qu'entraînement de la bande transporteuse (3).

6. Dispositif selon l'une quelconque des revendications 1 à 5, **caractérisé en ce que** la bande transporteuse (3) forme une boucle périphérique sans fin.

7. Dispositif selon la revendication 6, **caractérisé en ce que** l'unité de réglage est constituée d'un entraînement et d'un composant de transmission de mouvement, au moins une partie du composant de transmission de mouvement étant disposée à l'intérieur de la boucle sans fin formée par la bande transporteuse (3), et pouvant être déplacée par rapport à celle-ci.

8. Dispositif selon la revendication 7, **caractérisé en ce que** le composant de transmission de mouvement est pour l'essentiel disposé perpendiculairement au plan formé par les cylindres de renvoi (4).

9. Dispositif selon la revendication 7 ou 8, **caractérisé en ce qu'**un moteur est prévu en tant qu'entraînement, qui est couplé au composant de transmission de mouvement par l'intermédiaire d'une transmission, laquelle convertit le mouvement de rotation de l'arbre d'entraînement du moteur en un mouvement de translation du composant de transmission de mouvement.

10. Dispositif selon la revendication 9, **caractérisé en ce que** l'arbre d'entraînement du moteur est réalisé sous la forme d'une broche, et est en prise avec une douille filetée (12) disposée sur le composant de transmission de mouvement.

11. Dispositif selon la revendication 9 ou 10, **caractérisé en ce qu'**un moteur pas à pas (13) est prévu en tant que moteur.

12. Dispositif selon la revendication 11, **caractérisé en ce que**, en tant que composant de transmission de mouvement, il est prévu un cylindre de pression (5) et une fourche de pression (6) reliée à celui-ci par complémentarité de forces, le cylindre de pression (5) étant disposé à l'intérieur de la boucle sans fin formée par la bande transporteuse (3), et la fourche de pression (6) étant reliée au moteur pas à pas (13).

13. Dispositif selon l'une des revendications 11 ou 12, **caractérisé en ce que** le moteur pas à pas (13) est disposé élastiquement sur le cadre au moyen de ressorts (16).

14. Dispositif selon l'une au moins des revendications 7 à 13, **caractérisé en ce que** des butées mécaniques (15) sont prévues pour limiter le mouvement du composant de transmission de mouvement.
